# EUROPEAN PATENT APPLICATION

(11) **EP 2 339 393 A1**
(43) Date of publication of application: **29.06.2011**
(21) Application number: 09820478.7
(22) Date of filing: 22.07.2009
(51) Int. Cl.: G02F 1/133, F21V 23/00, G02F 1/13357, G09F 9/00, G09G 3/20, G09G 3/34, G09G 3/36, G09G 5/00, H01L 33/00, H05B 37/02, F21Y 101/02

(54) **LIQUID CRYSTAL DISPLAY DEVICE**

(30) Priority: 14.10.2008 JP 2008265302
(71) Applicant: Sharp Kabushiki Kaisha, Osaka-shi, Osaka 545-8522 (JP)
(72) Inventor: FUJIWARA, Kohji, Osaka-shi Osaka 545-8522 (JP); MURAI, Takayuki, Osaka-shi Osaka 545-8522 (JP); YAMAMOTO, Tomohiko, Osaka-shi Osaka 545-8522 (JP)
(74) Representative: Müller-Boré & Partner Patentanwälte
(86) International application number: PCT/JP2009/063120
(87) International publication number: WO 2010/044300

(57) **Abstract**

A liquid crystal display device 100 includes thermistors 28 provided separately from light-emitting diodes 22 in an area where the light-emitting diodes 22 are arranged, and a light emission control section 201 for controlling a voltage to be applied to the light-emitting diodes 22. Based on temperature information obtained from the thermistors 28, the light emission control section 201 decreases a target value v1 of the voltage to be applied to the light-emitting diodes 22 as the temperature increases and increases the target value v1 of the voltage to be applied to the light-emitting diodes 22 as the temperature decreases.

## Description

### TECHNICAL FIELD

The present invention relates to a liquid crystal display device. Particularly, the present invention relates to a liquid crystal display device including a plurality of light-emitting diodes arranged therein, and to the control of the light-emitting diodes.

### BACKGROUND ART

A liquid crystal display device (LCD) includes a backlight arranged on the back surface side of a liquid crystal display portion including a liquid crystal layer. Light radiated from the backlight illuminates the back surface of the liquid crystal display portion. By controlling the voltage applied between two substrates sandwiching the liquid crystal layer therebetween, the liquid crystal layer of the liquid crystal display portion is switched between a mode in which light is blocked thereby and another mode in which light is transmitted therethrough, thus displaying light of a desired color through a color filter. Backlights of such liquid crystal display devices employ light-emitting diodes (LEDs) as light sources as disclosed for example in Japanese Published Patent Application No. 2007-165632 (Patent Document 1).

As stated in the above publication, a light-emitting diode generally has a characteristic that its relative luminance lowers as the ambient temperature increases. Where light-emitting diodes are used as backlight devices, some countermeasures are needed for keeping the output luminance constant irrespective of temperature changes. This publication discloses using diodes as temperature sensors to measure the temperature around the light-emitting diodes and correcting the temperature within the light-emitting diode block. Thus, it is possible to stably maintain the color temperature and the luminance of the light-emitting diodes.

### CITATION LIST

### PATENT DOCUMENT

Patent Document 1: Japanese Published Patent Application No. 2007-165632

### SUMMARY OF THE INVENTION

### TECHNICAL PROBLEM

The above publication discloses using some of the light-emitting diodes as temperature detection means. Where some of the light-emitting diodes are used as temperature detection means, light-emitting diodes themselves generate heat when lit. There are some individual variations between light-emitting diodes in terms of the degree of heat generation. In order to more precisely and stably control the color temperature and the luminance of the light-emitting diodes, it is desirable to correct the temperature of the light-emitting diodes with a finer precision. In view of this, the present invention proposes a novel structure capable of more precisely and stably controlling the color temperature and the luminance of light-emitting diodes (LEDs).

### SOLUTION TO THE PROBLEM

A liquid crystal display device of the present invention includes a plurality of light-emitting diodes arranged on a back surface of a liquid crystal display portion. Thermistors are provided separately from the light-emitting diodes in an area where the light-emitting diodes are arranged. The liquid crystal display device further includes a light emission control section for controlling a voltage to be applied to the light-emitting diodes. Based on temperature information obtained from the thermistors, the light emission control section decreases the target value of the voltage to be applied to the light-emitting diodes as the temperature increases and increases the target value of the voltage to be applied to the light-emitting diodes as the temperature decreases.

With the liquid crystal display device, the target voltage value decreases as the temperature increases and the target voltage value increases as the temperature decreases through the control by the light emission control section. Thus, it is possible to have the light-emitting diodes emit light stably, and it is also possible to keep the heat generation and the power consumption low.

In one embodiment, the liquid crystal display device may include a target voltage storage section pre-storing a relationship between the temperature information obtained from the thermistors and the target value of the voltage to be applied to the light-emitting diodes. In this case, the light emission control section can set the target value of the voltage to be applied to the light-emitting diodes from the relationship between the temperature information and the target voltage value stored in the target voltage storage section based on the temperature information obtained from the thermistors.

In another embodiment, the liquid crystal display device may include a reference voltage storage section storing a reference voltage for the target value of the voltage to be applied to the light-emitting diodes. In this case, the light emission control section can set the target value of the voltage to be applied to the light-emitting diodes by correcting the reference voltage stored in the reference voltage storage section based on the temperature information obtained from the thermistors.

The liquid crystal display device may include a plurality of thermistors dispersedly arranged across the area where the light-emitting diodes are arranged. In this case, the light emission control section may divide the area where the light-emitting diodes are arranged into a plurality of zones and obtain the temperature information of each zone based on the thermistors to set the target value of the voltage to be applied to the light-emitting diodes for each zone.

The target value of the voltage to be applied to the light-emitting diodes may be set based on a lower limit value of a VF value of the light-emitting diodes.

The plurality of light-emitting diodes may include three types of light-emitting diodes emitting light of R, G and B which when combined produce white light. In this case, the light emission control section may vary the target value of the voltage to be applied to the light-emitting diodes with respect to the temperature information obtained from the thermistors for each of light-emitting diodes emitting light of R, G and B. In this case, the light emission control section may vary the target value of the voltage to be applied to the light-emitting diodes with respect to the temperature information obtained from the thermistors between the light-emitting diodes emitting light of R and the light-emitting diodes emitting light of G and B.

The thermistors may be formed by using a sinter including an oxide of a metal mixed therein, for example. The number of thermistors with respect to the light-emitting diodes may vary from one area to another.

The present invention is also applicable to a backlight for illuminating a back surface of a liquid crystal display portion of a liquid crystal display device. In this case, the backlight may includes a plurality of light-emitting diodes arranged so as to oppose the back surface of the liquid crystal display portion, and thermistors provided separately from the light-emitting diodes in an area where the light-emitting diodes are arranged. It may include a light emission control section for controlling a voltage to be applied to the light-emitting diodes based on temperature information obtained from the thermistors. In this case, based on the temperature information obtained from the thermistors, the light emission control section decreases a target value of the voltage to be applied to the light-emitting diodes as the temperature increases and increases the target value of the voltage to be applied to the light-emitting diodes as the temperature decreases.

A method for controlling a liquid crystal display device backlight according to an embodiment of the present invention first performs a first step of obtaining temperature information from thermistors provided separately from light-emitting diodes in an area where the light-emitting diodes are arranged. Next, it performs a second step of setting the target value of the voltage to be applied to the light-emitting diodes from a pre-stored relationship between the temperature information and the target voltage value based on the temperature information obtained in the first step. Then, it performs a third step of controlling the voltage to be applied to the light-emitting diodes based on the target voltage value set in the second step.

In another embodiment, a method for controlling a liquid crystal display device backlight first performs a first step of obtaining temperature information from thermistors provided separately from light-emitting diodes in an area where the light-emitting diodes are arranged. Next, it performs a second step of setting a target value of a voltage to be applied to the light-emitting diodes by correcting a reference voltage which is pre-stored for the target value of the voltage to be applied to the light-emitting diodes based on the temperature information obtained in the first step. Then, it performs a third step of controlling the voltage to be applied to the light-emitting diodes based on the target voltage value set in the second step.

### BRIEF DESCRIPTION OF THE DRAWINGS

[FIG. 1] FIG. 1 is a cross-sectional view showing a liquid crystal display device according to an embodiment of the present invention.
[FIG. 2] FIG. 2 is a cross-sectional view showing a liquid crystal panel of a liquid crystal display device according to an embodiment of the present invention.
[FIG. 3] FIG. 3 is a plan view showing a pixel area portion of an array substrate of a liquid crystal display device according to an embodiment of the present invention.
[FIG. 4] FIG. 4 is a plan view showing a pixel area portion of a color filter substrate of a liquid crystal display device according to an embodiment of the present invention.
[FIG. 5A] FIG. 5A is a partially-enlarged plan view showing an arrangement of light-emitting diodes and thermistors of a liquid crystal display device according to an embodiment of the present invention.
[FIG. 5B] FIG. 5B is a plan view showing an arrangement of light-emitting diodes and thermistors of a liquid crystal display device according to an embodiment of the present invention.
[FIG. 6A] FIG. 6A is a graph showing the relationship between the VF value and the temperature of a light-emitting diode.
[FIG. 6B] FIG. 6B is a graph showing the relationship between the VF value and the temperature of a light-emitting diode.
[FIG. 6C] FIG. 6C is a graph showing the relationship between the temperature and the target voltage value for a liquid crystal display device according to an embodiment of the present invention.
[FIG. 7] FIG. 7 is a cross-sectional view showing a liquid crystal display device according to another embodiment of the present invention.
[FIG. 8] FIG. 8 is a plan view showing an example substrate configuration arranged inside a backlight chassis of a liquid crystal display device according to an embodiment of the present invention.

### DESCRIPTION OF EMBODIMENTS

A liquid crystal display device according to an embodiment of the present invention will now be described with reference to the drawings.

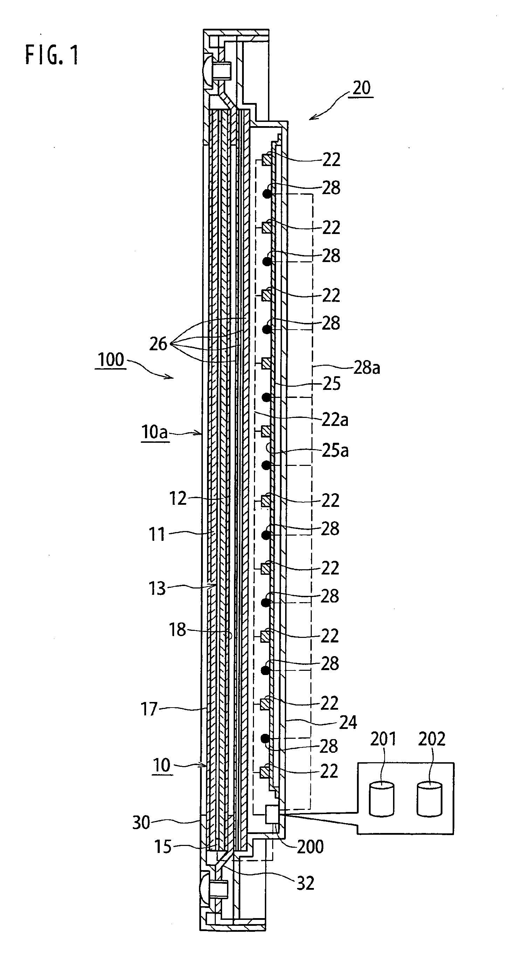

FIG. 1 schematically shows a cross-sectional configuration of a liquid crystal display device 100 according to an embodiment of the present invention. As shown in FIG. 1, the liquid crystal display device 100 includes a liquid crystal panel 10 as a liquid crystal display portion, and a backlight 20. The liquid crystal display device 100 uses light-emitting diodes (LEDs) as light sources 22 of the backlight 20. Here, the structure of the liquid crystal display device 100 will be described schematically, and then the structure and the control of the backlight 20 will be described.

The liquid crystal panel 10 of the liquid crystal display device 100 generally has a rectangular shape as a whole, and is formed by a pair of light-transmitting substrates 11 and 12 (glass substrates). In the present embodiment, one of the substrates 11 and 12 on the front side is a color filter substrate 11 (CF substrate), and one on the reverse side is an array substrate 12 (TFT substrate).

As shown in FIG. 1, the color filter substrate 11 and the array substrate 12 each have a pixel area 10a (an area where pixels are formed) in the present embodiment. The color filter substrate 11 and the array substrate 12 are arranged opposing each other. A sealant 15 is provided between the color filter substrate 11 and the array substrate 12 so as to surround the periphery (peripheral edge) of the pixel area 10a in the circumferential direction.

A liquid crystal layer 13 is provided between the color filter substrate 11 and the array substrate 12. A liquid crystal material including liquid crystal molecules is sealed in the liquid crystal layer 13. The orientation of liquid crystal molecules of the liquid crystal material is controlled through electric field application between the color filter substrate 11 and the array substrate 12, thus varying the optical characteristics thereof. The sealant 15 seals the liquid crystal material of the liquid crystal layer 13.

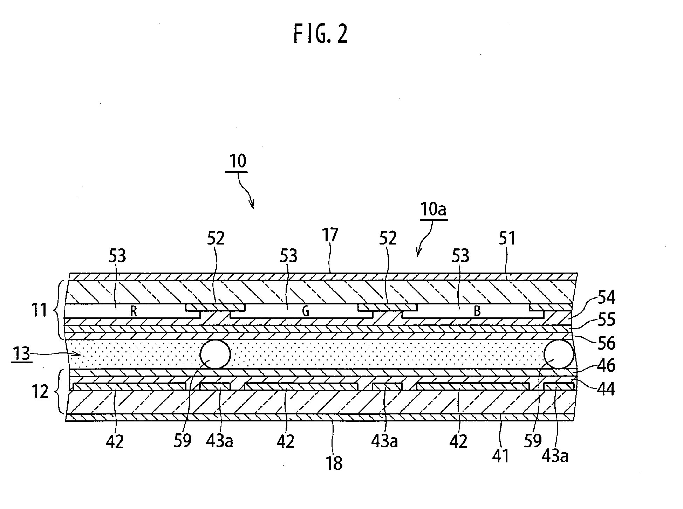

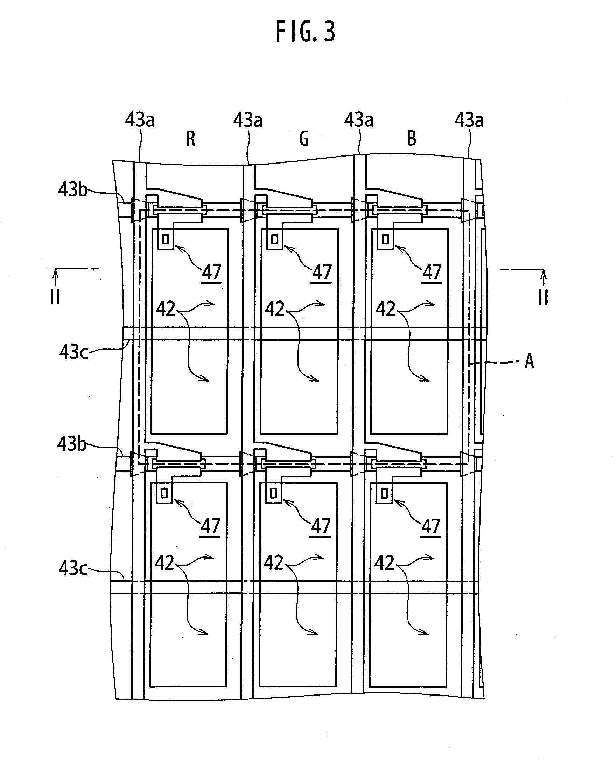

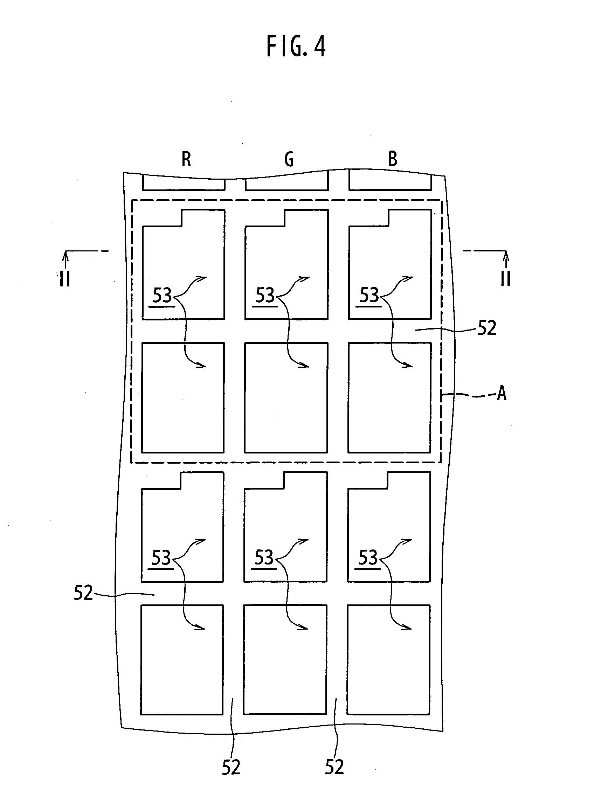

The array substrate 12 and the color filter substrate 11 will now be described in this order. FIGS. 2 to 4 show the pixel area 10a of the liquid crystal panel 10. FIG. 2 shows a cross-sectional view of the color filter substrate 11 and the array substrate 12 attached together. FIG. 3 shows a plan view of a pixel area portion of the array substrate 12, and FIG. 4 shows a plan view of a pixel area portion of the color filter substrate 11. In FIGS. 3 and 4, the area delimited by broken line A represents an area of one pixel of the liquid crystal display device 100.

In the present embodiment, the array substrate 12 includes a pixel electrode 42, bus lines 43a to 43c, a flattening layer 44, an alignment film 46 (horizontal alignment film), and a thin film transistor 47 formed on the front side (the side of the liquid crystal layer 13) of a glass substrate 41, as shown in FIGS. 2 and 3. The pixel electrode 42 is made of ITO (indium tin oxide) which is a transparent conductive material, and a voltage according to the image is supplied to the pixel electrode 42 with predetermined timing via the bus lines 43a to 43c and the thin film transistor 47 (see FIG. 3). The flattening layer 44 is formed by an insulative material, and covers the pixel electrode 42 and the bus lines 43a to 43c (see FIG. 3). The alignment film 46 made of polyimide, or the like, is formed on the upper side (the side of the liquid crystal layer 13) of the flattening layer 44. The front surface (the surface on the side of the liquid crystal layer 13) of the alignment film 46 is subjected to a rubbing process for defining the orientation of liquid crystal molecules in the absence of an applied voltage.

As shown in FIGS. 2 and 4, the color filter substrate 11 includes a black matrix 52, color filters 53, a flattening layer 54, a counter electrode 55 and an alignment film 56 (horizontal alignment film) formed on the reverse side (the side of the liquid crystal layer 13) of a glass substrate 51. The black matrix 52 is formed by a metal such as Cr (chromium) so that light is not transmitted through areas between pixels. The color filters 53 include three colors of red (R), green (G) and blue (B). As shown in FIGS. 2 to 4, one of R, G and B color filters 53 opposes one pixel electrode 42 of the array substrate 12. As shown in FIG. 2, the flattening layer 54 is formed so as to cover the black matrix 52 and the color filters 53. The counter electrode 55 made of ITO (indium tin oxide) is formed on the lower side (the side of the liquid crystal layer 13) of the flattening layer 54. The alignment film 56 is formed on the lower side (the side of the liquid crystal layer 13) of the counter electrode 55. The front surface (the surface on the side of the liquid crystal layer 13) of the alignment film 56 is also subjected to a rubbing process. Note that the orientation of the alignment film 46 of the array substrate 12 and the orientation of the alignment film 56 of the color filter substrate 11 are different from each other by 90°.

As shown in FIG. 2, the glass substrates 41 and 51 are arranged with spherical or columnar spacers 59 (spherical in the illustrated example) sandwiched therebetween. The spacers 59 are formed by a plastic, a glass, or the like, for example. The gap between the glass substrates 41 and 51 is held by the sealant 15 described above (see FIG. 1) and the spacers 59, thus maintaining the liquid crystal layer 13 constant.

Moreover, as shown in FIGS. 1 and 2, polarizers 17 and 18 are attached to the front surface side of the color filter substrate 11 (the glass substrate 51) and the reverse surface side of the array substrate 12 (the glass substrate 41), respectively. In a so-called normally-white liquid crystal display device, the two polarizers 17 and 18 are arranged with the polarization axes thereof perpendicular to each other. In a so-called normally-black liquid crystal display device, the two polarizers 17 and 18 are arranged with the polarization axes thereof parallel to each other. In the present embodiment, a bezel 30 is attached to the front side of the liquid crystal panel 10 as shown in FIG. 1. A frame 32 is attached to the reverse side of the liquid crystal panel 10. The bezel 30 and the frame 32 support the liquid crystal panel 10. Moreover, the frame 32 has an opening in a portion corresponding to the pixel area 10a of the liquid crystal panel 10. The backlight 20 supported by a backlight chassis 24 is attached to the reverse side of the liquid crystal panel 10.

As shown in FIG. 1, the backlight 20 is an external light source arranged on the reverse side (the right side in FIG. 1) of the liquid crystal panel 10. In the present embodiment, the backlight 20 includes a plurality of light-emitting diodes 22 (LEDs), and the backlight chassis 24. In the present embodiment, the backlight chassis 24 has a box-like shape that is open toward the front side (the side of the liquid crystal panel 10), and the light-emitting diodes 22 are dispersedly arranged within the backlight chassis 24. The arrangement and the control of the light-emitting diodes 22 will later be described in greater detail. A plurality of optical sheets 26 are layered together in the opening of the backlight chassis 24.

For example, the optical sheets 26 include a diffuser, a diffusion sheet, a lens sheet, and a luminance-increasing sheet in this order from the reverse side. The backlight chassis 24 is attached to the reverse side of the frame 32 of the liquid crystal panel 10 with the light-emitting diodes 22 facing the liquid crystal panel 10 described above. The optical sheets 26 are sandwiched between the reverse surface of the frame 32 of the liquid crystal panel 10 and the front surface of the backlight chassis 24. As shown in FIG. 1, the liquid crystal display device 100 includes a control section 200 (e.g., a light control circuit such as a cold-cathode tube inverter circuit) for adjusting the luminance (brightness) of the backlight 20. The control section 200 adjusts the brightness of the backlight 20 by adjusting the power to be input to the backlight 20, for example. In this case, the control section 200 can brighten (increase the luminance of) the backlight 20 by increasing the power to be input to the backlight 20. The control section 200 can also dim (decrease the luminance of) the backlight 20 by decreasing the power to be input to the backlight 20.

Liquid crystal molecules in the liquid crystal layer 13 are controlled by applying a controlled voltage between the color filter substrate 11 and the array substrate 12. With the liquid crystal panel 10, the light of the backlight 20 can be blocked or passed, and the transmittance thereof can be varied, by controlling the liquid crystal molecules in the liquid crystal layer 13, for each pixel (more specifically, for each of sub-pixels defined as R, G and B). Moreover, the liquid crystal display device 100 displays an intended image while the luminance, or the like, of the backlight 20 is controlled.

The structure of the backlight 20, particularly the arrangement and the control of the light-emitting diodes 22, will now be described.

In the present embodiment, the backlight 20 uses a plurality of light-emitting diodes 22 as light sources as shown in FIG. 1. In the present embodiment, the light-emitting diodes 22 include three types of light-emitting diodes emitting light of R, G and B which when combined produce white light.

Note that the backlight 20 preferably uses white light whose balance is adjusted in terms of R, G and B light intensities, etc. The backlight 20 using the light-emitting diodes 22 may employ a configuration where white LEDs emitting white light are arranged to thereby emit white light illumination, or a configuration where LEDs (light-emitting diodes) of three colors of R (red), G (green) and B (blue) are arranged to thereby mix these three colors of light to produce white light. Here, methods using white LEDs include, for example, a method in which R, G and B phosphors are used in combination with short-wave LED chips to obtain white, a method in which a yellow phosphor is used in combination with blue LED chips to obtain white, a method in which white is obtained as mixed color from LED chips of three colors of R, G and B, and a method in which white is obtained as mixed color from LED chips of two colors that are complementary to each other.

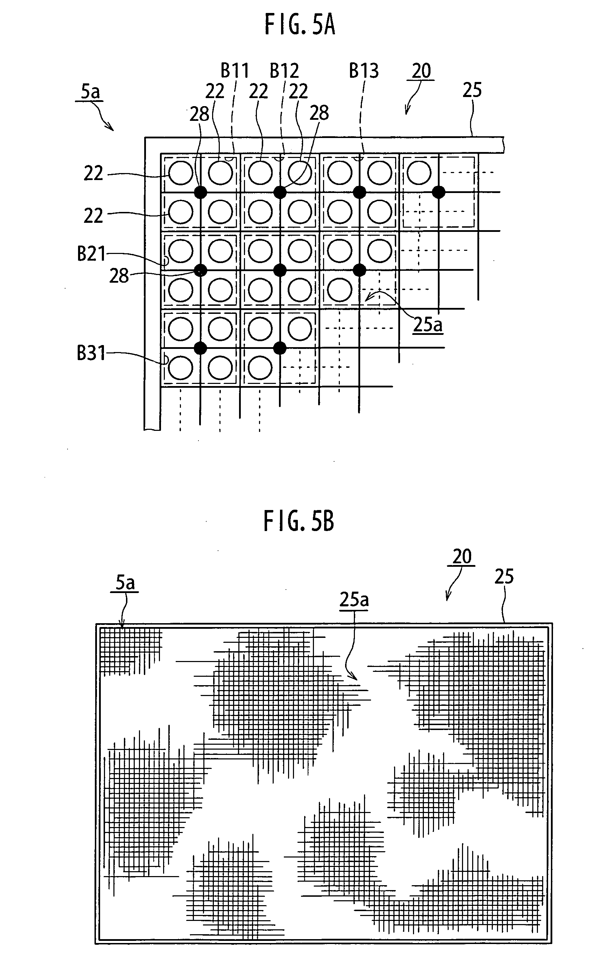

In the present embodiment, as shown in FIG. 1, the light-emitting diodes 22 are attached to a reflective substrate 25 arranged inside the backlight chassis 24 so as to oppose the back surface of the liquid crystal panel 10. The light-emitting diodes 22 have light-emitting portions facing the back surface of the liquid crystal panel 10. The reflective substrate 25 has a light-reflecting mirror surface on a surface 25a (reflection surface) opposing the liquid crystal panel 10. Light of the light-emitting diodes 22 leaking to the side of the reflective substrate 25 is reflected by the surface 25a toward the back surface of the liquid crystal panel 10. The light-emitting diodes 22 are dispersedly arranged across the reflective substrate 25. FIGS. 5A and 5B are plan views each schematically showing the surface 25a of the reflective substrate 25 opposing the liquid crystal panel 10, wherein FIG. 5A is a plan view showing, on an enlarged scale, a portion indicated by an arrow 5a in FIG. 5B. In the present embodiment, the light-emitting diodes 22 are arranged in a lattice pattern on the surface 25a as shown in FIG. 5A. Note that the arrangement of the light-emitting diodes 22 is not limited to the lattice pattern shown in FIG. 5A, and may be an arrangement (a staggered pattern or a zigzag pattern) such that positions of the light-emitting diodes 22 are evenly shifted from one another from one row to another, for example.

A light-emitting diode (LED) generally has a characteristic that its relative luminance lowers as the ambient temperature increases. The light-emitting efficiency of a light-emitting diode varies due to changes in the ambient temperature. In view of this, with the liquid crystal display device 100, the voltage and the current to be applied to the light-emitting diodes 22 are controlled by the control section 200.

That is, as shown in FIG. 1, the liquid crystal display device 100 includes the control section 200, and thermistors 28 (temperature sensors). The control section 200 controls the luminance, the color temperature, etc., of the backlight 20. FIG. 1 schematically shows the control section 200 and the thermistors 28. Hereinafter, FIG. 1 should be referred to as necessary for the structure of the liquid crystal display device 100.

The control section 200 is an electronic processor, and includes arithmetic means having an arithmetic function implemented by MPU, CPU, or the like, and storage means implemented by a non-volatile memory, or the like. The control section 200 is configured so as to implement an intended function by means of a pre-stored program. Note that although not discussed here, the control section 200 in practice is also responsible for controlling parameters other than the luminance and the color temperature of the backlight 20 in the present embodiment. For example, it controls the voltage to be applied to the liquid crystal layer 13 of the liquid crystal panel 10.

As shown in FIG. 5A, the thermistors 28 are provided, separately from the light-emitting diodes 22, in the area where the light-emitting diodes 22 are arranged. In the present embodiment, the thermistors 28 are provided on the reflective substrate 25 on which the light-emitting diodes 22 are arranged. The light-emitting diodes 22 are arranged in a lattice pattern on the surface 25a of the reflective substrate 25 which is on the side of the liquid crystal panel 10. Similarly, the thermistors 28 are arranged each at the center of a set of four light-emitting diodes 22 arranged in a lattice pattern with the detection section facing toward the liquid crystal panel 10 of the reflective substrate 25. Note that where the light-emitting diodes 22 are arranged in a staggered lattice pattern, a zigzag pattern, or the like, a plurality of thermistors 28 can be dispersedly arranged across an area where a plurality of light-emitting diodes 22 are arranged, depending on the arrangement of the light-emitting diodes 22. With a plurality of thermistors 28 dispersedly arranged across an area where a plurality of light-emitting diodes 22 are arranged, it is possible to more precisely obtain temperature changes of the area where the light-emitting diodes 22 are arranged. Note that the arrangement of the light-emitting diodes 22 and the arrangement of the thermistors 28 are not limited to those described above, but they can be arranged at appropriate positions. In a preferred embodiment, the thermistors 28 are evenly dispersedly arranged. However, it is not always necessary that the thermistors 28 are evenly dispersedly arranged, but can be arranged at appropriate positions selected depending on the specific configuration, etc., of the liquid crystal panel 10.

The thermistors 28 may be any of various types of thermistors as long as they can electrically obtain temperature information based on changes in resistance value caused by temperature changes. For example, they may be thermistors using a sinter including an oxide of a metal such as nickel, manganese, cobalt, and iron mixed therein. Such a thermistor typically shows NTC (negative temperature coefficient) with which the resistance decreases as the temperature increases. For example, the thermistors 28 can be those whose temperature changes generally in proportion to changes in resistance value, and whose resistance value changes greatly for a temperature change. Thus, it is possible to easily and accurately obtain temperature information.

The light-emitting diodes 22 are controlled based on the temperature information obtained by the thermistors 28. In the present embodiment, the thermistors 28 are electrically connected to the control section 200 by wiring 28a (see FIG. 1). The light-emitting diodes 22 are connected to the control section 200 via wiring 22a (see FIG. 1), and the control section 200 electrically controls the voltage to be applied to the light-emitting diodes 22 based on the temperature information obtained from the thermistors 28.

In the present embodiment, the control section 200 includes a light emission control section 201 and a target voltage storage section 202 as shown in FIG. 1.

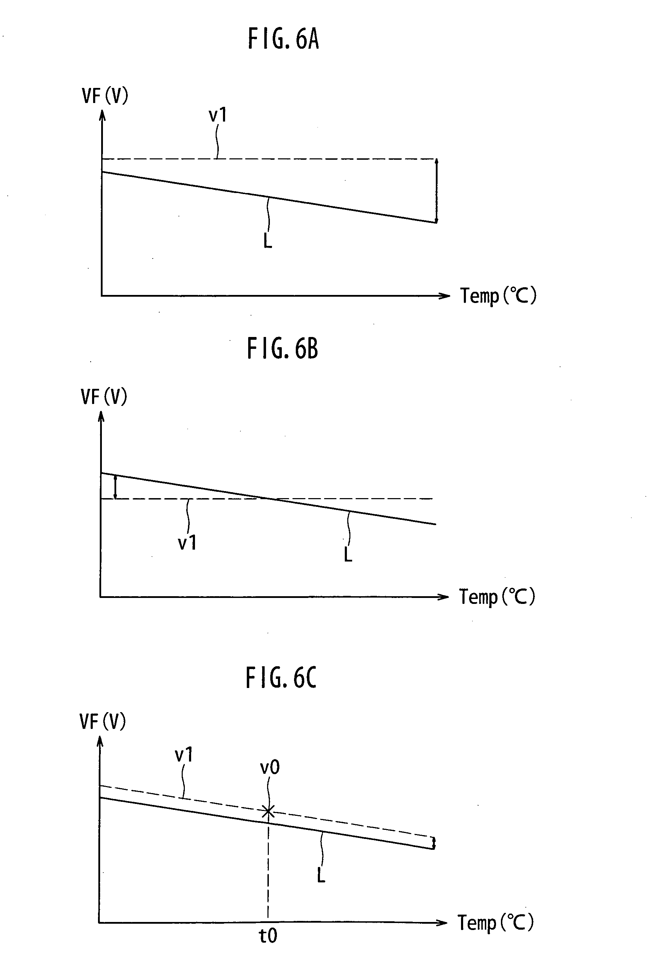

The light emission control section 201 controls the voltage to be applied to the light-emitting diodes 22. In the present embodiment, based on the temperature information obtained from the thermistors 28, the light emission control section 201 decreases the target value v1 of the voltage to be applied to the light-emitting diodes 22 when the temperature increases (see FIG. 6C). Based on the temperature information obtained from the thermistors 28, the light emission control section 201 increases the target value v1 of the voltage to be applied to the light-emitting diodes 22 when the temperature decreases (see FIG. 6C). Note that the luminance (the voltage to be applied to the light-emitting diodes 22) of the light-emitting diodes 22 can be adjusted by, for example, a pulse width modulation method, a PWM method.

The target voltage storage section 202 pre-stores the relationship between the temperature information obtained from the thermistors 28 and the target value of the voltage to be applied to the light-emitting diodes 22. In this case, the target voltage storage section 202 may store the relationship between the temperature information and the target voltage value v1 in a table in which the temperature information is represented by one coordinate and the target voltage value v1 by the other coordinate, for example. In the present embodiment, the light emission control section 201 sets the target value of the voltage to be applied to the light-emitting diodes 22 with reference to the relationship between the temperature information and the target voltage value stored in the target voltage storage section 202 based on the temperature information obtained from the thermistors 28.

Although there are individual differences, the light-emitting diodes 22 have a certain relationship between the ambient temperature and the voltage to be applied. In view of this, for example, data regarding the relationship between the temperature around the light-emitting diodes 22 and the voltage to be applied to the light-emitting diodes 22 can be collected in advance. The target voltage storage section 202 can store the relationship between the temperature information obtained from the thermistors 28 and the target value of the voltage to be applied to the light-emitting diodes 22 based on the data.

In the present embodiment, tests are performed in advance for the light-emitting diodes 22 so as to obtain data regarding the relationship between the temperature around the light-emitting diodes 22 and the VF value. The relationship between the temperature information obtained from the thermistors 28 and the target value of the voltage to be applied to the light-emitting diodes 22 can be stored based on such data. Here, the VF value refers to an acceptable range of the applied voltage over which light is properly emitted from light-emitting diodes.

FIGS. 6A, 6B and 6C each show the relationship between the VF value and the temperature of a light-emitting diode. FIG. 6C further shows the relationship between the temperature and the target voltage value v1 for the liquid crystal display device 100 of the present embodiment. FIGS. 6A and 6B each show a comparative example of FIG. 6C.

As shown in FIG. 6A, the lower limit value L of the VF value tends to decrease as the temperature increases. In view of this, in order to have the light-emitting diodes 22 emit light stably even under lower temperatures, for example, one may consider setting the target voltage value v1 based on the lower limit value of the VF value under lower temperatures. For example, as shown in FIG. 6A, based on the VF value under lower temperatures, a voltage slightly higher than the lower limit value L can be set as the target voltage value v1. In this case, the voltage to be applied to the light-emitting diodes 22 can be controlled at a constant target voltage value v1, and it is therefore easy to control the voltage to be applied to the light-emitting diodes 22. In this case, however, if the temperature increases, the applied voltage may increase past the upper limit of the VF value, and therefore the light-emitting diodes 22 may generate unnecessary heat or the power consumption may increase uselessly.

For example, as shown in FIG. 6B, one may consider setting the target voltage value v1 based on the VF value under room temperature. In this case, the voltage to be applied to the light-emitting diodes 22 can be controlled at a constant target voltage value v1, and it is therefore easy to control the voltage to be applied to the light-emitting diodes 22. However, under lower temperatures, the value of the voltage to be applied to the light-emitting diodes 22 may be lower than the lower limit value L of the VF value, thus failing to have the light-emitting diodes 22 emit light stably.

The present inventor believes that it is preferred that a voltage slightly higher than the lower limit value L of the VF value described above is applied to the light-emitting diodes 22 in view of the precision of the thermistors 28, the voltage disturbance due to the control, etc. That is, the lower limit value L of the VF value represents the lower limit of the applied voltage with which the light-emitting diodes 22 properly emit light at the temperature. When a voltage higher than the lower limit value L of the VF value is applied to the light-emitting diodes 22, the amount of heat generation increases and the power consumption increases as the voltage applied to the light-emitting diodes 22 increases. When the voltage applied to the light-emitting diodes 22 is excessively lower than the lower limit value L of the VF value, it is not possible to have the light-emitting diodes 22 emit light sufficiently at such temperatures. By applying a voltage slightly higher than the lower limit value L of the VF value described above to the light-emitting diodes 22, it is possible to have the light-emitting diodes 22 emit light stably, and it is also possible to keep the heat generation and the power consumption low.

In the present embodiment, the light emission control section 201 controls the target value v1 of the voltage to be applied to the light-emitting diodes 22 based on the temperature information obtained from the thermistors 28 as shown in FIG. 6C. In this case, the light emission control section 201 decreases the target value v1 of the voltage to be applied to the light-emitting diodes 22 when the temperature increases, and increases the target value v1 of the voltage to be applied to the light-emitting diodes 22 when the temperature decreases. A plurality of thermistors 28 are provided in the present embodiment. In this case, the minimum value among the temperature information of the thermistors 28 (the temperature information representing the lowest temperature) may be employed as the temperature information obtained from the thermistors 28. Thus, the applied voltage can be set based on the temperature of an area of the backlight 20 of the lowest temperature, and it is possible to avoid problems such as luminance non-uniformity due to insufficient voltage. In this case, temperature information representing one of the lowest temperatures (e.g., the second lowest, or the third lowest) rather than the minimum value may be employed, among the temperature information of the thermistors 28, as the temperature information obtained from the thermistors 28. Thus, it is possible to avoid problems even in cases where some thermistors represent extremely low temperature information due to defects thereof. Which number from the lowest temperature should be employed, of the temperature information of the thermistor 28, can be determined while taking into consideration the number of the thermistors 28 to be provided, the rate of occurrence of defects of the thermistors 28, etc.

In the present embodiment, the relationship between the temperature information obtained from the thermistors 28 and the target value v1 of the voltage to be applied to the light-emitting diodes 22 is stored in the target voltage storage section 202 as described above. As the relationship between the temperature information and the target voltage value v1, data can be obtained of the relationship between the temperature information obtained from the thermistors 28 and the VF value of the light-emitting diodes 22 through pre-conducted tests, for example. Based on the data, the relationship between the temperature information and the target voltage value v1 can be set and stored in the target voltage storage section 202 so that the target voltage value v1 is slightly higher than the lower limit value L of the VF value as shown in FIG. 6C. Thus, the target voltage value v1 can be set based on the lower limit value L of the VF value of the light-emitting diodes 22.

Then, the light emission control section 201 sets the target value v1 of the voltage to be applied to the light-emitting diodes 22 from the relationship between the temperature information and the target voltage value v1 (see FIG. 6C) stored in the target voltage storage section 202, based on the temperature information obtained from the thermistors 28.

In this case, the light emission control section 201 first obtains temperature information from thermistors provided separately from light-emitting diodes (first step). Next, the target value v1 of the voltage to be applied to the light-emitting diodes 22 is set based on the temperature information obtained in the first step and the pre-stored relationship between the temperature information and the target voltage value v1 (see FIG. 6C) (second step). Then, based on the target voltage value v1 set in the second step, the voltage to be applied to the light-emitting diodes 22 is controlled (third step). The control from the first step to the third step is repeatedly performed with predetermined timing. For example, the control from the first step to the third step can be repeatedly performed by obtaining the temperature information from the thermistors 28 for every passage of a predetermined amount of time. While the interval at which the temperature information is obtained from the thermistors 28 may be determined appropriately, an excessive frequency results in a high control load, and may affect other control operations. For example, where it is used in a TV, or the like, the interval can be normally about 0.5 to 15 sec, and preferably from about 3 to 8 sec.

Thus, as shown in FIG. 6C, the target voltage value v1 decreases as the temperature increases, and the target voltage value v1 increases as the temperature decreases. Then, the voltage to be applied to the light-emitting diodes 22 increases as the temperature decreases, and the voltage to be applied to the light-emitting diodes 22 decreases as the temperature increases. Thus, in the present embodiment, a voltage slight higher than the lower limit value L of the VF value can be applied to the light-emitting diodes 22. Then, it is possible to have the light-emitting diodes 22 emit light stably, and it is also possible to keep the heat generation and the power consumption low.

A different method may be employed as the control method for applying a voltage slightly higher than the lower limit value L of the VF value to the light-emitting diodes 22.

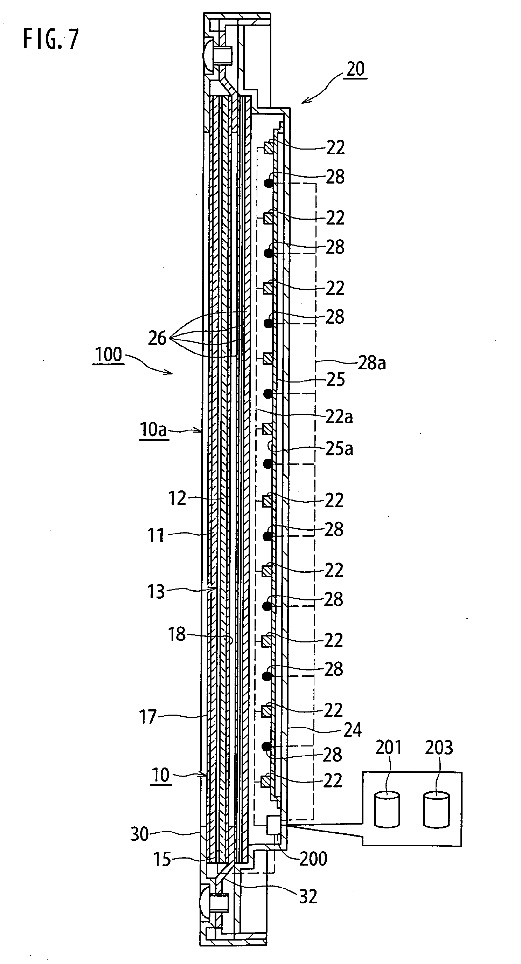

FIG. 7 shows another embodiment of the liquid crystal display device 100. As shown in the figure, the control section 200 may include a reference voltage storage section 203 storing a reference voltage v0 (see FIG. 6C) for the target value of the voltage to be applied to the light-emitting diodes 22. Then, the light emission control section 201 may correct the reference voltage v0 stored in the reference voltage storage section 203 based on the temperature information obtained from the thermistors 28 to set the target value v1 of the voltage to be applied to the light-emitting diodes 22.

That is, although there are individual differences, the light-emitting diodes 22 have a certain relationship between the ambient temperature and the voltage to be applied. This relationship can be approximated with a linear relationship. For example, the relationship between the ambient temperature and the voltage to be applied can be replaced by a linear function, or the like. In view of this, the reference voltage v0 (see FIG. 6C) serving as a reference of a voltage to be applied to the light-emitting diodes 22 can be determined in advance, and the reference voltage v0 can be corrected appropriately based on the temperature information obtained from the thermistors 28.

Note that as the reference voltage v0, a voltage to be applied to the light-emitting diodes 22 can be set at an appropriate temperature. In this case, the voltage to be applied to the light-emitting diodes 22 can be set to the reference voltage v0 when the temperature is at the reference temperature t0. The arithmetic expression used for the correction can be determined based on data collected in advance of the relationship between the temperature around the light-emitting diodes 22 and the voltage to be applied to the light-emitting diodes 22, for example. Then, the target voltage value v1 can be obtained by a predetermined arithmetic expression based on the temperature information obtained from the thermistors 28, the reference temperature t0 and the reference voltage v0.

In this case, the light emission control section 201 first obtains the temperature information from the thermistors 28 (first step). Next, for the target value v1 of the voltage to be applied to the light-emitting diodes 22, the pre-stored reference voltage v0 (see FIG. 6C) is corrected based on the temperature information obtained in the first step so as to set the target value v1 of the voltage to be applied to the light-emitting diodes 22 (second step). Then, based on the target voltage value v1 set in the second step, the voltage to be applied to the light-emitting diodes 22 is controlled (third step). The control from the first step to the third step is repeatedly performed with predetermined timing. Thus, as shown in FIG. 6C, the target voltage value v1 decreases as the temperature increases, and the target voltage value v1 increases as the temperature decreases.

Thus, the light emission control section 201 may employ any of various methods in which the voltage to be applied to the light-emitting diodes 22 is decreased as the temperature increases and the voltage to be applied to the light-emitting diodes 22 is increased as the temperature decreases based on the temperature information obtained from the thermistors 28.

As described above, with the liquid crystal display device 100, the target voltage value v1 decreases as the temperature increases and the target voltage value v1 increases as the temperature decreases through the control by the light emission control section 201 as shown in FIG. 6C. Thus, the voltage to be applied to the light-emitting diodes 22 increases as the temperature decreases, and the voltage to be applied to the light-emitting diodes 22 decreases as the temperature increases. Thus, it is possible to have the light-emitting diodes 22 emit light stably, and it is also possible to keep the heat generation and the power consumption low. Moreover, in the present embodiment, the target voltage value v1 is determined based on the lower limit value L of the VF value, and a voltage slightly higher than the lower limit value L of the VF value can be applied to the light-emitting diodes 22. Thus, the voltage to be applied to the light-emitting diodes 22 can be controlled appropriately, and it is possible to have the light-emitting diodes 22 emit light more stably and to keep the heat generation and the power consumption low.

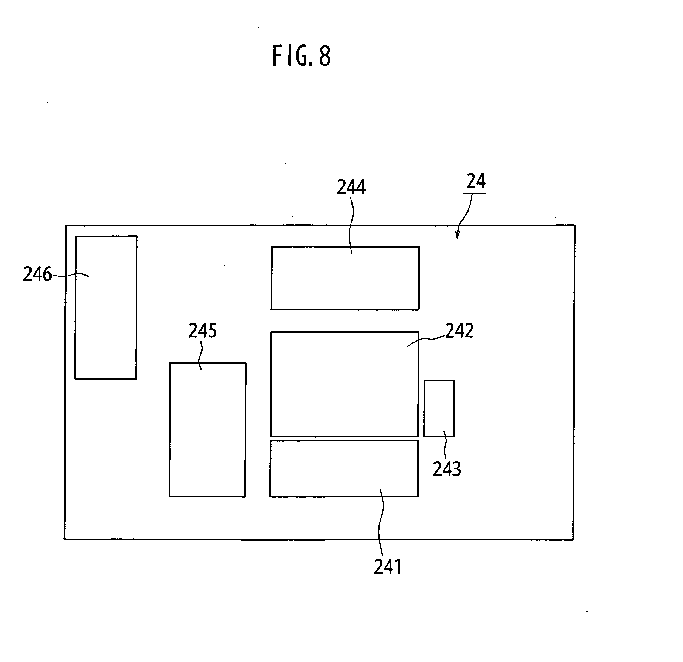

The temperature of the liquid crystal display device 100 will not be uniform entirely across the area where the light-emitting diodes 22 are arranged. Particularly, when a large liquid crystal panel 10 is used, for example, there will be temperature non-uniformity in an area where the light-emitting diodes 22 are arranged. For example, the liquid crystal display device 100 may include a plurality of electronic circuit substrates 241 to 246 (see FIG. 8) arranged within the backlight chassis 24 as shown in FIG. 7. In this case, the electronic circuit substrates 241 to 246 each perform an intended electronic process, and individually generate heat during the process. Heat is also generated from various substrates of the liquid crystal panel 10 with wiring for electric signals routed thereon, etc., such as the driving circuit for the liquid crystal panel 10. Such heat is not uniform across the area where the light-emitting diodes 22 are arranged, and will cause temperature non-uniformity in the area where the light-emitting diodes 22 are arranged.

For example, the electronic circuit substrates include a terminal substrate 241, a power supply substrate 242, an AC inlet substrate 243, a liquid crystal controller substrate 244, a main substrate 245, an LED control substrate 246, etc., for example. The terminal substrate 241 has a function of inputting/outputting video and audio to/from external units. The power supply substrate 242 has a function of generating or supplying the power supply to various substrates. The AC inlet substrate 243 has a function of a noise filter. The liquid crystal controller substrate 244 has a function of driving the liquid crystal panel. The main substrate 245 has a function of controlling the overall operation of the liquid crystal display device 100. For example, where the liquid crystal display device 100 is used as a device for watching TV, the main substrate 245 controls the overall operation of the liquid crystal display device 100 functioning as a TV. The LED control substrate 246 has a function of driving the backlight 20 (specifically, the light-emitting diodes 22 (LEDs) as the light sources 22). Note that FIG. 8 shows an exemplary layout of the substrates, and the arrangement of the electronic circuit substrates is not limited to the illustrated example. Other electronic circuit substrates may be arranged in addition to the illustrated electronic circuit substrates, and some of the illustrated electronic circuit substrates may not be provided.

In the present embodiment, the thermistors 28 are dispersedly arranged across the area where the light-emitting diodes 22 are arranged as shown in FIGS. 5A and 5B. The light emission control section 201 divides the area where the light-emitting diodes 22 are arranged into a plurality of zones (broken lines B11, B12, B13, ..., B21, ..., B31, ..., etc., in FIG. 5A), and obtains the temperature information of each zone based on the thermistor 28. Then, the target value v1 of the voltage to be applied to the light-emitting diodes 22 is set for each zone.

That is, in the present embodiment, zones are set as indicated by broken lines B11, B12, B13, ..., B21, ..., B31, ..., etc., each set including four light-emitting diodes 22 arranged in a lattice pattern as shown in FIG. 5A. The thermistor 28 is arranged at the center of each zone. For example, in a case where the liquid crystal display device 100 includes 1624 (58 horizontal × 28 vertical) light-emitting diodes 22, 406 zones can be set each including four light-emitting diodes 22. For example, in a case where the liquid crystal display device 100 includes 1152 (48 horizontal × 24 vertical) light-emitting diodes 22, 288 zones can be set each including four light-emitting diodes 22.

The light emission control section 201 obtains temperature information of each zone based on the thermistor 28. In the present embodiment, the temperature information of each zone can be obtained based on the thermistor 28 arranged at the center of the zone, for example. Note that measurement with a thermistor 28 may possibly involve a defect of the thermistor 28. Therefore, in the present embodiment, the temperature information of each zone may be obtained based not only on the thermistor 28 arranged at the center of the zone but also on a plurality of thermistors 28 in and around the zone. In this case, the average value of temperature information can be obtained based on the thermistors 28. When obtaining the average of temperature information of the thermistors 28, the average value can be obtained while excluding the maximum value and the minimum value, for example. Thus, it is possible to reduce the influence of defects of individual thermistors 28. Moreover, when obtaining the temperature information of a zone based on the thermistors 28, the minimum value of the temperature information of the thermistors 28 (temperature information indicating the lowest temperature) may be employed, instead of obtaining the average of temperature information of the thermistors 28. Thus, the applied voltage can be set based on the temperature of an area of the backlight 20 of the lowest temperature, and it is possible to avoid problems such as luminance non-uniformity due to insufficient voltage. In this case, temperature information representing one of the lowest temperatures (e.g., the second lowest, or the third lowest) rather than the minimum value may be employed, among the temperature information of the thermistors 28, as the temperature information obtained from the thermistors 28. Thus, it is possible to avoid problems even in cases where some thermistors represent extremely low temperature information due to defects thereof.

The light emission control section 201 can set the target value v1 of the voltage to be applied to the light-emitting diodes 22 for each zone based on the temperature information thus obtained for the zone. Thus, the voltage to be applied to the light-emitting diodes 22 can be appropriately controlled for each zone depending on the temperature information. Therefore, particularly in a case where a large-size liquid crystal panel 10 is used and there is temperature non-uniformity across an area where the light-emitting diodes 22 are arranged, it is possible to prevent the occurrence of non-uniformity in the luminance or the color temperature of the backlight. Note that the zone is not limited to that of the embodiment described above, but may be determined appropriately depending on the number of light-emitting diodes 22, the degree of distribution thereof, the degree of temperature non-uniformity occurring in the area where the light-emitting diodes 22 are arranged, etc. That is, the zone can be set so that the light-emitting diodes 22 can be controlled appropriately depending on the specific configuration of the liquid crystal display device 100 such as the arrangement of the light-emitting diodes 22, the arrangement of the thermistors 28 and the arrangement of substrates. For example, depending on the specific configuration of the liquid crystal panel 10, etc., finer zones may be defined in areas where violent temperature changes may occur during operation, whereas larger zones may be defined in areas where there are less temperature changes during operation. The number of thermistors 28 with respect to the light-emitting diodes 22 may vary from one area to another. For example, the number of thermistors 28 with respect to the light-emitting diodes 22 may be increased in areas where violent temperature changes may occur during operation. The number of thermistors 28 with respect to the light-emitting diodes 22 may be decreased in areas where there are less temperature changes during operation.

In the present embodiment, the light-emitting diodes 22 include three types of light-emitting diodes emitting light of R, G and B which when combined produce white light. The light emission control section 201 may use different target values v1 of the voltage to be applied to light-emitting diodes emitting light of R, G and B. That is, light-emitting diodes emitting light of R, G and B employ different light-emitting diodes between which the temperature-VF value relationship may vary. Therefore, light-emitting diodes emitting light of R, G and B can each be controlled appropriately by using different target values v1 of the voltage to be applied to the light-emitting diodes emitting light of R, G and B.

Note that the light emission control section 201 may use a target value v1 of the voltage to be applied to light-emitting diodes emitting light of R, and a different target value v1 of the voltage to be applied to light-emitting diodes emitting light of G and B. That is, among light-emitting diodes emitting light of R, G and B, those emitting light of G and B may be close or equal to each other in terms of the temperature-VF value relationship. In this case, by using a target value v1 of the voltage to be applied to light-emitting diodes emitting light of R and a different target value v1 of the voltage to be applied to light-emitting diodes emitting light of G and B, light-emitting diodes emitting light of R, G and B can each be controlled appropriately. In this case, among light-emitting diodes emitting light of R, G and B, the same target value v1 of the voltage can be applied to light-emitting diodes emitting light of G and B. Therefore, as compared with a case where different target values v1 of voltages are applied to light-emitting diodes emitting light of R, G and B, it is possible to simplify the control configuration of the light emission control section, etc.

Note that in this case, if there is a correlation in terms of the temperature-VF value relationship between light-emitting diodes emitting light of R, G and B, for example, the control configuration can be further modified. For example, the target voltage value v1 for light-emitting diodes emitting light of one of R, G and B may be obtained based on the temperature information of the thermistors 28, and then the target voltage values v1 for light-emitting diodes emitting light of other colors may be obtained. For example, the target voltage value v1 for light-emitting diodes emitting light of R is obtained based on the temperature information of the thermistors 28. Then, based on the correlation, the target voltage values v1 for light-emitting diodes emitting light of G and B may be obtained from the target value v1 of the voltage to be applied to the light-emitting diode emitting light of R. Thus, the light emission control section may vary the target value of the voltage to be applied to light-emitting diodes with respect to the temperature information obtained from the thermistors for each of light-emitting diodes emitting light of R, G and B.

While a liquid crystal display device according to an embodiment of the present invention has been described above, the liquid crystal display device of the present invention is not limited to the embodiment above.

For example, the specific configuration of the liquid crystal display device is not limited to the embodiment above. In the embodiment above, the backlight employs a so-called back-lit type backlight, where a plurality of light-emitting diodes are arranged in a backlight chassis to thereby form a planar light source opposing the liquid crystal panel 10. The configuration of the backlight is not limited to this. For example, although not shown in the figure, the backlight may employ a backlight of a so-called edge-lit type (also called a "side-lit type") where a linear light source including light-emitting diodes arranged in a linear pattern is placed on an edge surface of the lightguide and is converted to a planar light source.

### DESCRIPTION OF REFERENCE CHARACTERS

- 10: Liquid crystal panel (liquid crystal display portion)
- 10a: Pixel area
- 11: Color filter substrate (CF substrate, transmissive substrate)
- 12: Array substrate (TFT substrate, transmissive substrate)
- 13: Liquid crystal layer
- 15: Sealant
- 17, 18: Polarizer
- 20: Backlight
- 22: Light-emitting diode (light source)
- 22a: Wiring
- 24: Backlight chassis
- 25: Reflective substrate
- 25a: Reflection surface (surface opposing liquid crystal panel)
- 26: Optical sheet
- 28: Thermistor (temperature sensor)
- 28a: Wiring
- 30: Bezel
- 32: Frame
- 41: Glass substrate (glass substrate of array substrate)
- 42: Pixel electrode
- 43a-43c: Bus line
- 44: Flattening layer
- 46: Alignment film
- 47: Thin film transistor
- 51: Glass substrate (glass substrate of color filter substrate)
- 52: Black matrix
- 53: Color filter
- 54: Flattening layer
- 55: Counter electrode
- 56: Alignment film
- 59: Spacer
- 100: Liquid crystal display device
- 200: Control section
- 201: Light emission control section
- 202: Target voltage storage section
- 203: Reference voltage storage section
- 241: Terminal substrate
- 242: Power supply substrate
- 243: AC inlet substrate
- 244: Liquid crystal controller substrate
- 245: Main substrate
- 246: LED control substrate
- L: Lower limit value of VF value of light-emitting diode
- t0: Reference temperature
- v0: Reference voltage
- v1: Target value of voltage to be applied to light-emitting diode

## Claims

1. A liquid crystal display device comprising:
a plurality of light-emitting diodes arranged on a back surface of a liquid crystal display portion;
thermistors provided separately from the light-emitting diodes in an area where the light-emitting diodes are arranged; and
a light emission control section for controlling a voltage to be applied to the light-emitting diodes,
wherein based on temperature information obtained from the thermistors, the light emission control section decreases a target value of the voltage to be applied to the light-emitting diodes as the temperature increases and increases the target value of the voltage to be applied to the light-emitting diodes as the temperature decreases.

2. The liquid crystal display device of claim 1, comprising:
a target voltage storage section pre-storing a relationship between the temperature information obtained from the thermistors and the target value of the voltage to be applied to the light-emitting diodes,
wherein the light emission control section sets the target value of the voltage to be applied to the light-emitting diodes based on the temperature information obtained from the thermistors and the relationship between the temperature information and the target voltage value stored in the target voltage storage section.

3. The liquid crystal display device of claim 1, comprising:
a reference voltage storage section storing a reference voltage for the target value of the voltage to be applied to the light-emitting diodes,
wherein based on the temperature information obtained from the thermistors, the light emission control section sets the target value of the voltage to be applied to the light-emitting diodes by correcting the reference voltage stored in the reference voltage storage section.

4. The liquid crystal display device of one of claims 1 to 3, wherein:
a plurality of thermistors are dispersedly arranged across the area where the light-emitting diodes are arranged; and
the light emission control section divides the area where the light-emitting diodes are arranged into a plurality of zones and obtains the temperature information of each zone based on the thermistors to set the target value of the voltage to be applied to the light-emitting diodes for each zone.

5. The liquid crystal display device of one of claims 1 to 4, wherein the target value of the voltage to be applied to the light-emitting diodes is set based on a lower limit value of a VF value of the light-emitting diodes.

6. The liquid crystal display device of one of claims 1 to 5, wherein:
the plurality of light-emitting diodes include three types of light-emitting diodes emitting light of R, G and B which when combined produce white light; and
the light emission control section varies the target value of the voltage to be applied to the light-emitting diodes with respect to the temperature information obtained from the thermistors for each of the light-emitting diodes emitting light of R, G and B.

7. The liquid crystal display device of one of claims 1 to 5, wherein:
the plurality of light-emitting diodes include three types of light-emitting diodes emitting light of R, G and B which when combined produce white light; and
the light emission control section varies the target value of the voltage to be applied to the light-emitting diodes with respect to the temperature information obtained from the thermistors between the light-emitting diodes emitting light of R and the light-emitting diodes emitting light of G and B.

8. The liquid crystal display device of one of claims 1 to 7, wherein
the thermistors are formed by using a sinter including an oxide of a metal mixed therein.

9. The liquid crystal display device of one of claims 1 to 8, wherein the number of thermistors with respect to the light-emitting diodes varies from one area to another.

10. A backlight for illuminating a back surface of a liquid crystal display portion of a liquid crystal display device, comprising:
a plurality of light-emitting diodes arranged so as to oppose the back surface of the liquid crystal display portion;
thermistors provided separately from the light-emitting diodes in an area where the light-emitting diodes are arranged; and
a light emission control section for controlling a voltage to be applied to the light-emitting diodes,
wherein based on temperature information obtained from the thermistors, the light emission control section decreases a target value of the voltage to be applied to the light-emitting diodes as the temperature increases and increases the target value of the voltage to be applied to the light-emitting diodes as the temperature decreases.

11. A method for controlling a liquid crystal display device backlight having a backlight including a plurality of light-emitting diodes arranged on a back surface of a liquid crystal display portion, comprising:
a first step of obtaining temperature information from thermistors provided separately from the light-emitting diodes in an area where the light-emitting diodes are arranged;
a second step of setting a target value of a voltage to be applied to the light-emitting diodes from a pre-stored relationship between the temperature information and the target voltage value based on the temperature information obtained in the first step; and
a third step for controlling the voltage to be applied to the light-emitting diodes based on the target voltage value set in the second step.

12. A method for controlling a liquid crystal display device backlight having a backlight including a plurality of light-emitting diodes arranged on a back surface of a liquid crystal display portion, comprising:
a first step of obtaining temperature information from thermistors provided separately from the light-emitting diodes in an area where the light-emitting diodes are arranged;
a second step of setting a target value of a voltage to be applied to the light-emitting diodes by correcting a reference voltage which is pre-stored for the target value of the voltage to be applied to the light-emitting diodes based on the temperature information obtained in the first step; and
a third step of controlling the voltage to be applied to the light-emitting diodes based on the target voltage value set in the second step.
